# EUROPÄISCHE PATENTANMELDUNG

(11) **EP 3 451 606 A1**
(43) Veröffentlichungstag der Anmeldung: **06.03.2019**
(21) Anmeldenummer: 17188511.4
(22) Anmeldetag: 30.08.2017
(51) Int. Cl.: H04L 29/06, H04L 29/08, H04L 12/46

(54) **VERFAHREN ZUR ÜBERPRÜFUNG VON INNERHALB EINES INDUSTRIELLEN AUTOMATISIERUNGSSYSTEMS ÜBERMITTELTEN DATAGRAMMEN UND AUTOMATISIERUNGS- UND/ODER KOMMUNIKATIONSGERÄT**

(71) Anmelder: Siemens Aktiengesellschaft, 80333 München (DE)
(72) Erfinder: Schwering, Wolfgang, 91341 Röttenbach (DE)

(57) **Zusammenfassung**

Zur Überprüfung von innerhalb eines industriellen Automatisierungssystems mit mehreren Automatisierungszellen übermittelten Datagrammen werden zu überprüfende Datagramme aus den Automatisierungszellen über eine jeweilige Firewall-Schnittstelle zur Überprüfung an Firewall-System übermittelt und dort regelbasiert überprüft. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Eine besondere Bedeutung hat dabei eine Bereitstellung von Überwachungs-, Steuerungs- und Regelungsfunktionen in Echtzeit. Störungen von Kommunikationsverbindungen zwischen Automatisierungsgeräten oder Rechnereinheiten eines industriellen Automatisierungssystems können zu einer nachteiligen Wiederholung einer Übermittlung einer Dienstanforderung führen. Insbesondere können nicht oder nicht vollständig übermittelte Nachrichten einen Übergang oder Verbleib eines industriellen Automatisierungssystems in einen sicheren Betriebszustand verhindern und zu einem Ausfall einer industriellen Anlage führen. Eine besondere Problematik resultiert in industriellen Automatisierungssystemen aus einem Meldungsverkehr mit verhältnismäßig vielen, aber relativ kurzen in Echtzeit zu übermittelnden Nachrichten.

Aus US8555373B2 ist eine zwischen einem Quell-Gerät und einem Ziel-Gerät vorgesehene Firewall bekannt, die eine Hardware-Sicherheitskomponente zur Prüfung von aus einem Datenpaket extrahierten Daten gegen eine zulässige Liste umfasst. Zusätzlich führt die Hardware-Sicherheitskomponente eine zustandsbasierte Prüfung hinsichtlich eines Protokolls durch. Die Firewall kann als Security-Proxy ausgestaltet sein und mittels einer Software-Sicherheitskomponente gesicherte Sitzungen zwischen zwei Teilnehmern ermöglichen. Zur Authentifizierung bzw. Entschlüsselung zu prüfender Pakete und Verschlüsselung geprüfter Pakete greift die Software-Sicherheitskomponente auf die Hardware-Sicherheitskomponente zurück.

In US7958549B2 ist eine Firewall mit einem Verschlüsselungsprozessor und einem virtualisierten Server beschrieben. Dabei ist der Verschlüsselungsprozessor dem virtualisierten Server vorgeschaltet und entschlüsselt verschlüsselte Datenpakete, die dann an den virtualisierten Server zur Verarbeitung weitergeleitet werden. In umgekehrter Richtung empfängt der Verschlüsslungsprozessor vom virtualisierten Server verarbeitete Datenpakete, um diese Weiterleitung zu verschlüsseln.

In industriellen Automatisierungssystemen gewinnt eine fabrikübergreifende Vernetzung zunehmend an Bedeutung. Dabei werden mitunter autark betriebene Automatisierungszellen über ein industrielles Kommunikationsnetz im Sinn eines Backbone auf Steuerungsebene miteinander verbunden. Dabei wird das industrielle Kommunikationsnetz aufgrund von Verfügbarkeits-und Skalierbarkeitsanforderungen bevorzugt als IP-Kommunikationsnetz (OSI-Schicht 3) ausgelegt. Insbesondere besteht Bedarf, die einzelnen Automatisierungszellen gegeneinander abzusichern sowie zellübergreifende Zugriffe weitgehend zu beschränken. Darüber hinaus bestehen auch Anforderungen, Übergänge zwischen industriellen Kommunikationsnetzen einerseits und allgemeinen unternehmensweiten Kommunikationsnetzen andererseits durch Firewall-Mechanismen zu kontrollieren.

Der vorliegenden Erfindung liegt daher die Aufgabe zugrunde, ein Verfahren zur effizienten Überprüfung von innerhalb eines mehrere Automatisierungszellen umfassenden industriellen Automatisierungssystems übermittelten Datagrammen anzugeben sowie eine geeignete Vorrichtung zur Durchführung des Verfahrens zu schaffen.

Diese Aufgabe wird erfindungsgemäß durch ein Verfahren mit den in Anspruch 1 angegebenen Merkmalen und durch ein Automatisierungs- bzw. Kommunikationsgerät für ein industrielles Automatisierungssystem mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Überprüfung von innerhalb eines industriellen Automatisierungssystems übermittelten Datagrammen umfasst das Automatisierungssystem mehrere Automatisierungszellen, die über ein industrielles Kommunikationsnetz miteinander verbunden sind und jeweils eine Firewall-Schnittstelle sowie mehrere Automatisierungsgeräte umfassen. Die Firewall-Schnittstellen können beispielsweise jeweils in einen Controller oder Router der jeweiligen Automatisierungszelle integriert sein. Zu überprüfende Datagramme werden aus den Automatisierungszellen über die jeweilige Firewall-Schnittstelle zur Überprüfung an ein zumindest mittelbar mit dem industriellen Kommunikationsnetz verbundenes Firewall-System übermittelt und dort regelbasiert überprüft. Das Firewall-System wird durch zumindest eine innerhalb eines mehrere Rechnereinheiten umfassenden Datenverarbeitungssystems bereitgestellte virtuelle Maschine gebildet. Vorteilhafterweise überprüft das Firewall-System von den Firewall-Schnittstellen der Automatisierungszellen übermittelte Datagramme basierend auf festgelegten Sicherheitsregeln, übermittelt erfolgreich überprüfte Datagramme zurück an die jeweilige Firewall-Schnittstelle oder an eine Firewall-Schnittstelle einer Ziel-Automatisierungszelle und verwirft den festgelegten Sicherheitsregeln nicht entsprechende Datagramme.

Erfindungsgemäß wird zur Übermittlung der zu überprüfenden Datagramme jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt. Vorzugsweise werden die Datagramme innerhalb der Sicherungsschicht-Tunnel jeweils verschlüsselt übermittelt. Innerhalb der Sicherungsschicht-Tunnel werden übermittelte Datagramme jeweils in ein Tunnel-Datagramm gekapselt, das neben dem jeweiligen Datagramm einen Vermittlungsschicht-Header und einen Transportschicht-Header umfasst, und über eine Transportschicht-Verbindung zwischen der jeweiligen Firewall-Schnittstelle und dem Firewall-System übermittelt. Aus vorliegendem virtualisierten und verteilten Firewall-System, insbesondere aufgrund der Firewall-Schnittstellen, resultiert eine gute Skalierbarkeit und eine vereinfachte Konfiguration.

Das industrielle Kommunikationsnetz kann beispielsweise ein erstes Teilnetz sein, das gegenüber Zugriffen aus einem zweiten IP-basierten Teilnetz, insbesondere einem allgemeinen unternehmens- bzw. organisationsweiten Kommunikationsnetz, gesichert und über einen Router mit dem zweiten Teilnetz verbunden ist. Dabei kann das Datenverarbeitungssystem, das die das Firewall-System bildende virtuelle Maschine bereitstellt, an das zweite Teilnetz angeschlossen sein und somit als unternehmens- bzw. organisationsweites Rechnenzentrum genutzt werden.

Entsprechend einer bevorzugten Ausgestaltung der vorliegenden Erfindung sind die Firewall-Schnittstellen jeweils redundant ausgeführt und werden entsprechend Virtual Router Redundancy Protocol (VRRP) mit dem Firewall-System verbunden. Darüber hinaus können die Automatisierungszellen vorteilhafterweise jeweils redundant entsprechend Rapid Spanning Tree Protocol, High-availability Redundancy Protocol oder Media Redundancy Protocol mit dem industriellen Kommunikationsnetz verbunden werden.

Die Datagramme werden entsprechend einer weiteren vorteilhaften Ausgestaltung der vorliegenden Erfindung innerhalb der Sicherungsschicht-Tunnel jeweils über eine ungesicherte Transportschicht-Verbindung zwischen der jeweiligen Firewall-Schnittstelle und dem Firewall-System übermittelt. Vorzugsweise werden die Datagramme innerhalb der Sicherungsschicht-Tunnel jeweils entsprechend User Datagram Protocol zwischen der jeweiligen Firewall-Schnittstelle und dem Firewall-System übermittelt, so dass auch zeitkritischer Datenverkehr nicht nennenswert negativ beeinflusst wird. Die Sicherungsschicht-Tunnel zwischen der jeweiligen Firewall-Schnittstelle und dem Firewall-System werden entsprechend einer bevorzugten Weiterbildung der vorliegenden Erfindung entsprechend IETF RFC 7348 aufgebaut.

Das erfindungsgemäße Automatisierungs- bzw. Kommunikationsgerät für ein industrielles Automatisierungssystem ist zur Durchführung eines Verfahrens entsprechend vorangehenden Ausführungen vorgesehen und umfasst eine Firewall-Schnittstelle und ist einer mehrere Automatisierungsgeräte umfassenden Automatisierungszelle des Automatisierungssystems zugeordnet. Dabei ist die Automatisierungszelle mit einem industriellen Kommunikationsnetz verbunden. Das Automatisierungs- bzw. Kommunikationsgerät ist dafür ausgestaltet und eingerichtet, zu überprüfende Datagramme aus der Automatisierungszelle über die Firewall-Schnittstelle zur Überprüfung an ein zumindest mittelbar mit dem industriellen Kommunikationsnetz verbundenes Firewall-System zu übermitteln.

Erfindungsgemäß ist das Automatisierungs- bzw. Kommunikationsgerät dafür ausgestaltet und eingerichtet, zur Übermittlung der zu überprüfenden Datagramme einen Sicherungsschicht-Tunnel zwischen der Firewall-Schnittstelle und dem Firewall-System aufzubauen. Außerdem ist das Automatisierungs- bzw. Kommunikationsgerät dafür ausgestaltet und eingerichtet, sowohl zu prüfende Datagramme als auch zumindest erfolgreich überprüfte Datagramme innerhalb des Sicherungsschicht-Tunnels zu übermitteln. Darüber hinaus ist das Automatisierungs- bzw. Kommunikationsgerät dafür ausgestaltet und eingerichtet, innerhalb des Sicherungsschicht-Tunnels übermittelte Datagramme in ein Tunnel-Datagramm zu kapseln, das neben dem jeweiligen Datagramm einen Vermittlungsschicht-Header und einen Transportschicht-Header umfasst, und über eine Transportschicht-Verbindung zwischen der Firewall-Schnittstelle und dem Firewall-System zu übermitteln.

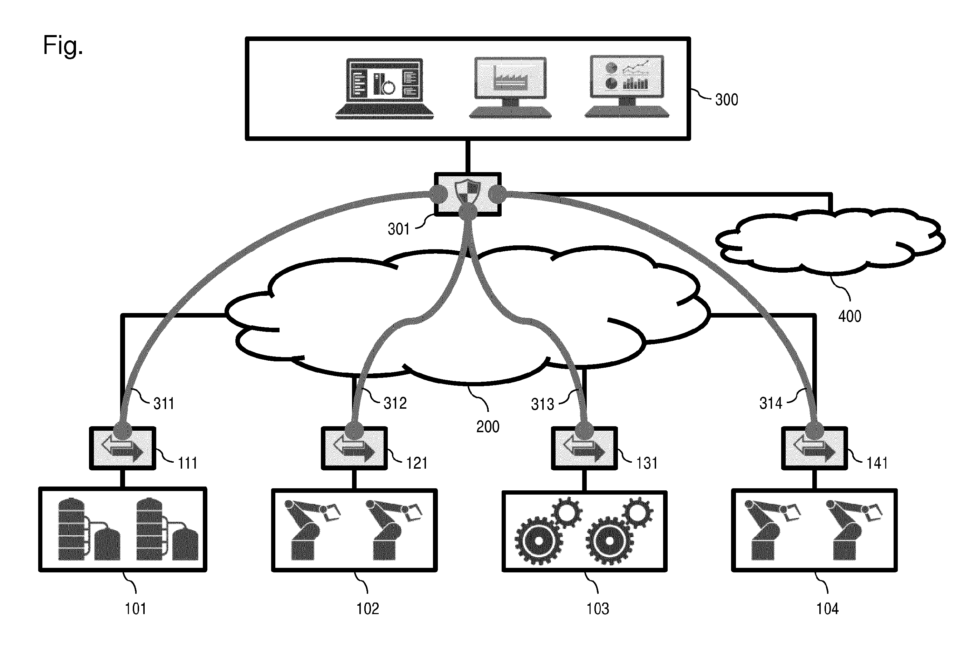

Die vorliegende Erfindung wird nachfolgend an einem Ausführungsbeispiel anhand der Zeichnung näher erläutert. Es zeigt die
- Figur: eine schematische Darstellung eines industriellen Automatisierungssystems mit mehreren Automatisierungszellen, die über ein industrielles Kommunikationsnetz miteinander verbunden sind.

Das in der Figur dargestellte industrielle Automatisierungssystem umfasst mehrere Automatisierungszellen 101-104, die über ein industrielles Kommunikationsnetz 200 miteinander verbunden sind und jeweils eine Firewall-Schnittstelle 111, 121, 131, 141 sowie mehrere Automatisierungsgeräte umfassen.

Die Firewall-Schnittstellen 111, 121, 131, 141 können beispielsweise jeweils in einen Controller oder in eine Netzwerkkomponente, insbesondere in einen Router, Switch, Gateway oder Access Point, der jeweiligen Automatisierungszelle 101-104 integriert sein. Die Automatisierungsgeräte können insbesondere Eingabe-/Ausgabeeinheiten, speicherprogrammierbare oder PC-basierte Steuerungen einer Maschine oder einer technischen Anlage sein, beispielsweise eines Roboters oder einer Fördervorrichtung.

Speicherprogrammierbare Steuerungen umfassen typischerweise jeweils ein Kommunikationsmodul, eine Zentraleinheit sowie zumindest eine Eingabe-/Ausgabe-Einheit (I/O-Modul). Grundsätzlich können Eingabe-/Ausgabe-Einheiten auch als dezentrale Peripheriemodule ausgestaltet sein, die entfernt von einer speicherprogrammierbaren Steuerung angeordnet sind. Die Eingabe-/Ausgabe-Einheiten dienen einem Austausch von Steuerungs- und Messgrößen zwischen dem jeweiligen Automatisierungsgerät und einer durch das Automatisierungsgerät gesteuerten Maschine oder Vorrichtung. Die Zentraleinheiten der Automatisierungsgeräte sind insbesondere für eine Ermittlung geeigneter Steuerungsgrößen aus erfassten Messgrößen vorgesehen. Über die Kommunikationsmodule können die speicherprogrammierbaren Steuerungen beispielsweise mit einem Switch oder Router oder zusätzlich mit einem Feldbus verbunden werden. Obige Komponenten einer speicherprogrammierbaren Steuerung werden vorzugsweise über ein Rückwandbus-System miteinander verbunden.

Die Firewall-Schnittstellen 111, 121, 131, 141 sind jeweils dafür ausgestaltet und eingerichtet, zu überprüfende Datagramme aus der jeweiligen Automatisierungszelle 101-104 zur Überprüfung an ein mit dem industriellen Kommunikationsnetz 200 verbundenes Firewall-System 301 zu übermitteln. Damit können die zu überprüfenden Datagramme aus den Automatisierungszellen 101-104 durch das Firewall-System 301 regelbasiert überprüft werden. Das Firewall-System 301 wird im vorliegenden Ausführungsbeispiel durch zumindest eine innerhalb eines mehrere Rechnereinheiten umfassenden Datenverarbeitungssystems 300 bereitgestellte virtuelle Maschine gebildet. Beispielsweise kann das Firewall-System 301 mittels eines Hypervisors bereitgestellt werden, der als Hardware-Abstraktionselement zwischen tatsächlich vorhandener Hardware und zumindest einem für das Firewall-System 301 installierbaren, ablauffähigen Betriebssystem dient. Ein solcher Hypervisor ermöglicht eine Bereitstellung einer virtuellen Umgebung, die partitionierte Hardwareressourcen, wie Prozessor, Speicher oder Peripheriegeräte umfasst. Anstelle eines Hypervisors können grundsätzlich auch andere bekannte Virtualisierungskonzepte als Hardware-Abstraktionsmittel zur Bereitstellung des Firewall-Systems 301 genutzt werden.

Das Firewall-System 301 überprüft von den Firewall-Schnittstellen 111, 121, 131, 141 der Automatisierungszellen 101-104 übermittelte Datagramme basierend auf festgelegten Sicherheitsregeln und übermittelt erfolgreich überprüfte Datagramme zurück an die jeweilige Firewall-Schnittstelle 111, 121, 131, 141 oder an eine Firewall-Schnittstelle einer Ziel-Automatisierungszelle. Den festgelegten Sicherheitsregeln nicht entsprechende Datagramme werden im vorliegenden Ausführungsbeispiel durch das Firewall-System 301 verworfen. Die Sicherheitsregeln umfassen vorzugsweise übliche Firewall-Regeln. Zusätzlich können die Sicherheitsregeln Regeln über eine Zulässigkeit von in Datagrammen angegebenen Steuerungsbefehlen bzw. Steuerungsparametern für Automatisierungsgeräte des industriellen Automatisierungssystems. Somit bietet das industrielle Kommunikationsnetz 200 sicherheitstechnisch kontrollierte Zugriffsmöglichkeiten auf die Automatisierungsgeräte in den Automatisierungszellen 101-104.

Darüber hinaus sind die Firewall-Schnittstellen 111, 121, 131, 141 dafür konfiguriert, zur Übermittlung der zu überprüfenden Datagramme jeweils einen Sicherungsschicht-Tunnel 311-314 zwischen der jeweiligen Firewall-Schnittstelle 111, 121, 131, 141 und dem Firewall-System 301 aufzubauen. Sowohl zu prüfende Datagramme als auch erfolgreich überprüfte Datagramme werden innerhalb des jeweiligen Sicherungsschicht-Tunnels 311-314 übermittelt. Innerhalb der Sicherungsschicht-Tunnel 311-314 übermittelte Datagramme werden jeweils in ein Tunnel-Datagramm gekapselt, das neben dem jeweiligen Datagramm einen Vermittlungsschicht-Header, insbesondere einen IP-Header (Internet Protocol), und einen Transportschicht-Header, insbesondere einen UDP-Header (User Datagram Protocol), umfasst. Die Tunnel-Datagramme werden jeweils über eine Transportschicht-Verbindung zwischen der jeweiligen Firewall-Schnittstelle 111, 121, 131, 141 und dem Firewall-System 301 übermittelt. Die Sicherungsschicht-Tunnel zwischen der jeweiligen Firewall-Schnittstelle und dem Firewall-System werden vorzugsweise entsprechend IETF RFC 7348 (VXLAN - Virtual eXtensible Local Area Network) aufgebaut.

Im vorliegenden Ausführungsbeispiel werden die Datagramme innerhalb der Sicherungsschicht-Tunnel 311-314 jeweils verschlüsselt übermittelt. Insbesondere können die Datagramme innerhalb der Sicherungsschicht-Tunnel 311-314 jeweils über eine ungesicherte Transportschicht-Verbindung zwischen der jeweiligen Firewall-Schnittstelle 111, 121, 131, 141 und dem Firewall-System 301 übermittelt werden. Vorzugsweise werden die Datagramme innerhalb der Sicherungsschicht-Tunnel 311-314 jeweils entsprechend User Datagram Protocol (UDP) zwischen der jeweiligen Firewall-Schnittstelle 111, 121, 131, 141 und dem Firewall-System 301 übermittelt.

Das industrielle Kommunikationsnetz 200 ist im vorliegenden Ausführungsbeispiel ein erstes Teilnetz, das gegenüber Zugriffen aus einem zweiten IP-basierten Teilnetz 400, insbesondere aus einem allgemeinen unternehmensweiten Kommunikationsnetz, gesichert und über einen Router mit dem zweiten Teilnetz 400 verbunden ist. Dabei sind das Firewall-System 301 und der Router zu einer integrierten Einheit zusammengefasst. Im Sinn einer vereinfachten Darstellung ist der Router in der Figur nicht als separate Einheit dargestellt. Grundsätzlich kann das Datenverarbeitungssystem 300, das die das Firewall-System 301 bildende virtuelle Maschine bereitstellt, auch nur an das zweite Teilnetz 400 angeschlossen sein und muss somit keine unmittelbare Verbindung zum industriellen Kommunikationsnetz 200 aufweisen.

Des weiteren können die Firewall-Schnittstellen 111, 121, 131, 141 jeweils redundant ausgeführt sein und entsprechend Virtual Router Redundancy Protocol (VRRP) mit dem Firewall-System 301 verbunden werden. Darüber hinaus können die Automatisierungszellen 101-104 jeweils redundant entsprechend Rapid Spanning Tree Protocol (RSTP), High-availability Redundancy Protocol (HSR) oder Media Redundancy Protocol (MRP) mit dem industriellen Kommunikationsnetz 200 verbunden sein.

## Patentansprüche

1. Verfahren zur Überprüfung von innerhalb eines industriellen Automatisierungssystems übermittelten Datagrammen, bei dem
- das Automatisierungssystem mehrere Automatisierungszellen (101-104) umfasst, die über ein industrielles Kommunikationsnetz (200) miteinander verbunden sind und jeweils eine Firewall-Schnittstelle (111, 121, 131, 141) sowie mehrere Automatisierungsgeräte umfassen,
- zu überprüfende Datagramme aus den Automatisierungszellen (101-104) über die jeweilige Firewall-Schnittstelle (111, 121, 131, 141) zur Überprüfung an ein zumindest mittelbar mit dem industriellen Kommunikationsnetz (200) verbundenes Firewall-System (301) übermittelt und dort regelbasiert überprüft werden,
- das Firewall-System (301) durch zumindest eine innerhalb eines mehrere Rechnereinheiten umfassenden Datenverarbeitungssystems (300) bereitgestellte virtuelle Maschine gebildet wird,
- zur Übermittlung der zu überprüfenden Datagramme jeweils ein Sicherungsschicht-Tunnel (311-314) zwischen der jeweiligen Firewall-Schnittstelle (111, 121, 131, 141) und dem Firewall-System (301) aufgebaut wird,
- sowohl zu prüfende Datagramme als auch zumindest erfolgreich überprüfte Datagramme innerhalb des jeweiligen Sicherungsschicht-Tunnels (311-314) übermittelt werden,
- innerhalb der Sicherungsschicht-Tunnel (311-314) übermittelte Datagramme jeweils in ein Tunnel-Datagramm gekapselt, das neben dem jeweiligen Datagramm einen Vermittlungsschicht-Header und einen Transportschicht-Header umfasst, und über eine Transportschicht-Verbindung zwischen der jeweiligen Firewall-Schnittstelle (111, 121, 131, 141) und dem Firewall-System (301) übermittelt werden.

2. Verfahren nach Anspruch 1,
bei dem die Firewall-Schnittstellen (111, 121, 131, 141) jeweils in einen Controller oder Router der jeweiligen Automatisierungszelle integriert sind.

3. Verfahren nach einem der Ansprüche 1 oder 2,
bei dem das industrielle Kommunikationsnetz (200) ein erstes Teilnetz ist, das gegenüber Zugriffen aus einem zweiten IP-basierten Teilnetz (400) gesichert und über einen Router mit dem zweiten Teilnetz verbunden ist.

4. Verfahren nach Anspruch 3,
bei dem das Datenverarbeitungssystem (300), das die das Firewall-System (301) bildende virtuelle Maschine bereitstellt, an das zweite Teilnetz (400) angeschlossen ist.

5. Verfahren nach einem der Ansprüche 1 bis 4,
bei dem die Firewall-Schnittstellen (111, 121, 131, 141) jeweils redundant ausgeführt sind und entsprechend Virtual Router Redundancy Protocol mit dem Firewall-System (301) verbunden werden.

6. Verfahren nach einem der Ansprüche 1 bis 5,
bei dem die Automatisierungszellen (101-104) jeweils redundant entsprechend Rapid Spanning Tree Protocol, High-availability Redundancy Protocol oder Media Redundancy Protocol mit dem industriellen Kommunikationsnetz (200) verbunden sind.

7. Verfahren nach einem der Ansprüche 1 bis 6,
bei dem die Datagramme innerhalb der Sicherungsschicht-Tunnel (311-314) jeweils verschlüsselt übermittelt werden.

8. Verfahren nach einem der Ansprüche 1 bis 7,
bei dem die Datagramme innerhalb der Sicherungsschicht-Tunnel (311-314) jeweils über eine ungesicherte Transportschicht-Verbindung zwischen der jeweiligen Firewall-Schnittstelle (111, 121, 131, 141) und dem Firewall-System (301) übermittelt werden.

9. Verfahren nach Anspruch 8,
bei dem die Datagramme innerhalb der Sicherungsschicht-Tunnel (311-314) jeweils entsprechend User Datagram Protocol zwischen der jeweiligen Firewall-Schnittstelle (111, 121, 131, 141) und dem Firewall-System (301) übermittelt werden.

10. Verfahren nach einem der Ansprüche 1 bis 9,
bei dem die Sicherungsschicht-Tunnel (311-314) zwischen der jeweiligen Firewall-Schnittstelle (111, 121, 131, 141) und dem Firewall-System (301) entsprechend IETF RFC 7348 aufgebaut werden.

11. Verfahren nach einem der Ansprüche 1 bis 10,
bei dem das Firewall-System (301) von den Firewall-Schnittstellen (111, 121, 131, 141) der Automatisierungszellen (101-104) übermittelte Datagramme basierend auf festgelegten Sicherheitsregeln überprüft, erfolgreich überprüfte Datagramme zurück an die jeweilige Firewall-Schnittstelle (111, 121, 131, 141) oder an eine Firewall-Schnittstelle einer Ziel-Automatisierungszelle übermittelt und den festgelegten Sicherheitsregeln nicht entsprechende Datagramme verwirft.

12. Automatisierungs- und/oder Kommunikationsgerät für ein industrielles Automatisierungssystem zur Durchführung eines Verfahrens nach einem der Ansprüche 1 bis 11, bei dem
- das Automatisierungs- und/oder Kommunikationsgerät eine Firewall-Schnittstelle (111, 121, 131, 141) umfasst und einer mehrere Automatisierungsgeräte umfassenden Automatisierungszelle (101-104) des Automatisierungssystems zugeordnet ist, wobei die Automatisierungszelle mit einem industriellen Kommunikationsnetz (200) verbunden ist,
- das Automatisierungs- und/oder Kommunikationsgerät dafür ausgestaltet und eingerichtet ist, zu überprüfende Datagramme aus der Automatisierungszelle (101-104) über die Firewall-Schnittstelle (111, 121, 131, 141) zur Überprüfung an ein zumindest mittelbar mit dem industriellen Kommunikationsnetz (200) verbundenes Firewall-System (301) zu übermitteln,
- das Automatisierungs- und/oder Kommunikationsgerät dafür ausgestaltet und eingerichtet ist, zur Übermittlung der zu überprüfenden Datagramme einen Sicherungsschicht-Tunnel (311-314) zwischen der Firewall-Schnittstelle (111, 121, 131, 141) und dem Firewall-System (301) aufzubauen,
- das Automatisierungs- und/oder Kommunikationsgerät dafür ausgestaltet und eingerichtet ist, sowohl zu prüfende Datagramme als auch zumindest erfolgreich überprüfte Datagramme innerhalb des Sicherungsschicht-Tunnels (311-314) zu übermitteln,
- das Automatisierungs- und/oder Kommunikationsgerät dafür ausgestaltet und eingerichtet ist, innerhalb des Sicherungsschicht-Tunnels (311-314) übermittelte Datagramme in ein Tunnel-Datagramm zu kapseln, das neben dem jeweiligen Datagramm einen Vermittlungsschicht-Header und einen Transportschicht-Header umfasst, und über eine Transportschicht-Verbindung zwischen der Firewall-Schnittstelle (111, 121, 131, 141) und dem Firewall-System (301) zu übermitteln.
